(19) Europäisches Patentamt
European Patent Office
Office européen des brevets

(11) **EP 2 413 643 B1**

(12) **FASCICULE DE BREVET EUROPEEN**

(45) Date de publication et mention de la délivrance du brevet:
**27.06.2018 Bulletin 2018/26**

(51) Int Cl.:
**H04W 52/26** *(2009.01)*

(21) Numéro de dépôt: **11173779.7**

(22) Date de dépôt: **13.07.2011**

(54) **Méthode centralisée d'allocation de puissance sous contrainte de qualité de service**

Zentralisiertes Verfahren zur Leistungsallokation unter Einschränkung durch Dienstqualitäts

Centralised method of allocation of power under constraints of quality of service

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.07.2010 FR 1056114**

(43) Date de publication de la demande:
**01.02.2012 Bulletin 2012/05**

(73) Titulaire: **Commissariat à l'Énergie Atomique et aux Énergies Alternatives 75015 Paris (FR)**

(72) Inventeurs:
• **Abgrall, Cédric**
  **38100 GRENOBLE (FR)**
• **Calvanese Strinati, Emilio**
  **38000 GRENOBLE (FR)**

(74) Mandataire: **Augarde, Eric et al Brevalex 56 Boulevard de l'Embouchure, Bât. B B.P. 27519 31075 Toulouse Cedex 2 (FR)**

(56) Documents cités:
**US-A1- 2007 060 167    US-A1- 2007 274 404
US-B1- 7 593 426**

• **CHUNG SHUE CHEN ET AL: "Optimal power allocation for two-cell sum rate maximization under minimum rate constraints", WIRELESS COMMUNICATION SYSTEMS. 2008. ISWCS '08. IEEE INTERNATIONAL SYMPOSIUM ON, IEEE, PISCATAWAY, NJ, USA, 21 octobre 2008 (2008-10-21), pages 396-400, XP031380366, ISBN: 978-1-4244-2488-7**
• **CEDRIC ABGRALL ET AL: "Inter-cell interference mitigation allocation for half-duplex relays based cooperation", WIRELESS DAYS (WD), 2009 2ND IFIP, IEEE, PISCATAWAY, NJ, USA, 15 décembre 2009 (2009-12-15), pages 1-6, XP031659488, ISBN: 978-1-4244-5660-4**

**Description**

**DOMAINE TECHNIQUE**

La présente invention concerne de manière générale le domaine des systèmes des télécommunications sans fil et plus particulièrement une méthode d'allocation de puissance dans un tel système.

**ÉTAT DE LA TECHNIQUE ANTÉRIEURE**

Un des problèmes affectant une communication au sein d'un système de télécommunication cellulaire est celui de l'interférence générée par les autres communications de la cellule ou des cellules voisines. On distingue classiquement l'interférence inter-cellulaire due aux communications des cellules voisines et l'interférence intra-cellulaire due aux communications de la même cellule où se trouve le terminal.

De nombreuses techniques ont été proposées et mises en oeuvre pour réduire l'interférence intra-cellulaire. La plupart de ces techniques reposent sur une allocation de ressources de transmission orthogonales, par exemple d'intervalles de temps de transmission (TDMA), de fréquences de transmission (FDMA), d'intervalles de sous-porteuses d'un multiplex OFDM (OFDMA), de codes de transmission (CDMA), de faisceaux de transmission (SDMA), voire d'une combinaison de telles ressources, de manière à séparer les différentes communications d'une même cellule.

Les ressources de transmission étant rares, celles-ci sont généralement réutilisées, au moins partiellement, d'une cellule à l'autre. Un module de gestion des ressources de transmission ou RRM (*Radio Resource Management*) est alors en charge d'allouer de manière statique ou dynamique les ressources de transmission aux différentes cellules. Il est notamment connu de réutiliser de manière statique des fréquences de transmission selon un schéma bi-dimensionnel (*Frequency Reuse Pattern*).

Du fait de la réutilisation des ressources de transmission, une première communication entre un premier terminal et une première station de base d'une cellule peut être interférée par une seconde communication, utilisant la même ressource de transmission, entre un second terminal et une seconde station de base d'une cellule voisine. La situation est encore davantage critique lorsque les cellules sont adjacentes et les terminaux sont en bordure de cellule. Dans ce cas, les terminaux doivent émettre à pleine puissance et le niveau d'interférence est alors élevé.

Pour une communication donnée, dite ici première communication, on appelle communément interférence intra-bande l'interférence induite par une seconde communication utilisant la même ressource de transmission que la première. Par opposition, on appelle interférence inter-bande celle induite par une seconde communication utilisant une ressource de transmission distincte (par exemple une fréquence de transmission voisine ou un autre intervalle de transmission) de celle utilisée par la première.

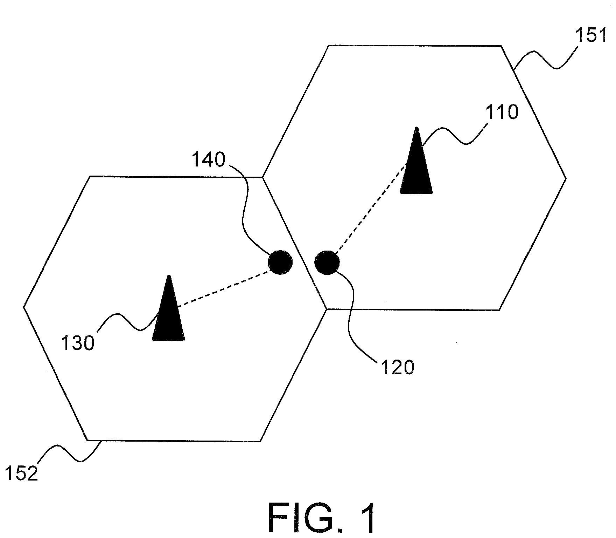

La Fig. 1 représente un système de télécommunication cellulaire très simplifié, comprenant deux cellules 151 et 152. La première cellule 151 contient un premier couple de terminaux constitué d'un premier terminal émetteur 110 et d'un premier terminal récepteur 120. De manière similaire, la seconde cellule 152 comprend un second couple de terminaux constitué d'un second terminal émetteur 130 et d'un second terminal récepteur 140. Par terminal, on entend ici un terminal mobile ou une station de base, voire un terminal relais dans le cas d'un canal relayé. En particulier, on comprendra que l'on considère ici aussi bien les communications sur voie montante (*uplink*) que sur voie descendante (*downlink*). On suppose en outre que la première communication entre les terminaux 110 et 120, utilise la ou les même(s) ressource(s) de transmission que la seconde transmission entre les terminaux 130 et 140 de sorte que les deux communications interfèrent entre elles.

Le traitement et la réduction de l'interférence inter-cellulaire ont fait l'objet de très nombreuses recherches.

La méthode de traitement la plus simple est de considérer l'interférence comme un simple bruit thermique. Cette méthode de traitement n'est toutefois acceptable que si le niveau d'interférence est faible. Il est à noter que la plupart des algorithmes d'allocation de puissance (*power allocation*) sont basés sur cette hypothèse.

D'autres méthodes de traitement permettent de réduire l'interférence en estimant le signal d'information de la (ou les) communication(s) interférente(s). Cela suppose que le terminal récepteur considéré sache décoder ces signaux d'information et connaisse par conséquent les codes ayant servi à les coder. Parmi ces méthodes, on connaît notamment les schémas de réduction d'interférence de type parallèle ou PIC (*Parallel Interference Canceller*) ou série (*Successive Interference Canceller*), bien connus de l'homme du métier.

Une autre approche classique pour réduire le niveau d'interférence est de mettre en oeuvre une méthode adaptative d'allocation de puissance (*adaptive power control*). Une telle méthode permet de contrôler les niveaux de puissance des différents terminaux émetteurs de manière à garantir une qualité de service prédéterminée aux différents utilisateurs. Cette qualité de service peut être mesurée selon le cas en termes de débit, de temps de latence, de taux d'erreur paquet, de couverture spatiale, etc. On appelle conventionnellement métrique de qualité de service, le ou les paramètre (s) utilisé (s) pour la mesurer. En règle générale, une communication d'un utilisateur requiert une qualité de service minimale qui est prise en compte ou négociée lors de la procédure d' admission de l'utilisateur dans la cellule.

Cette qualité de service minimale s'exprime sous la forme d'une contrainte sur la métrique de qualité de service : latence inférieure à un seuil, débit supérieur à un minimum garanti, etc. L'allocation de puissance est alors effectuée de manière à respecter la contrainte sur la métrique de qualité de service.

Enfin, l'allocation de puissance peut être prise en charge de manière centralisée (*Centralized Power Allocation*) par un noeud spécifique du réseau, NC (*Network Controller*), ou bien de manière distribuée (*Distributed Power Allocation*) au sein de chaque terminal.

Une méthode centralisée d'allocation de puissance est connue de l'article de C-H Yih et al. intitulé « Centralized power allocation algorithms for OFDM cellular networks » publié dans IEEE MILCOM 2003, pages 1250-1255.

Les méthodes d'allocation de puissance, centralisée ou non, font généralement l'hypothèse que l'interférence est assimilable à du bruit thermique. Toutefois cette hypothèse est bien souvent pessimiste de sorte que les puissances d'émission allouées peuvent être sensiblement supérieures à celles qui seraient nécessaires pour obtenir la qualité de service souhaitée. Cette allocation conduit par conséquent à une consommation d'énergie inutile et, pour les communications montantes, à une réduction de l'autonomie des terminaux.

Le brevet US-B-7593426 décrit une méthode d'allocation de puissance et de débit pour une pluralité d'utilisateurs d'un système de communication DSL utilisant une modulation OFDM.

Un premier but de l'invention est par conséquent de proposer une méthode centralisée d'allocation de puissance qui permette de réduire les puissances d'émission des terminaux pour une contrainte de qualité de service donnée.

Un second but de l'invention est de proposer une méthode centralisée d'allocation de puissance qui tienne compte des types d'interférence entre communications.

## EXPOSÉ DE L'INVENTION

La présente invention concerne une méthode d'allocation de puissance pour système de télécommunication sans fil comprenant au moins un premier couple de terminaux, telle que définie dans la revendication 1.

Des modes particuliers de réalisation de l'invention sont définis dans les revendications dépendantes

## BRÈVE DESCRIPTION DES DESSINS

D'autres caractéristiques et avantages de l'invention apparaîtront à la lecture d'un mode de réalisation préférentiel de l'invention, fait en référence aux figures jointes parmi lesquelles :

La Fig. 1 représente schématiquement une situation d'interférence inter-cellulaire intra-bande dans un système de communication cellulaire ;
La Fig. 2 représente schématiquement un modèle du système de communication cellulaire de la Fig. 1 ;
La Fig. 3 représente schématiquement un premier diagramme d'interférence pour une première communication ;
La Fig. 4 représente schématiquement un second diagramme d'interférence pour cette même communication ;
La Fig. 5 représente schématiquement un diagramme d'interférence pour une première et une seconde communications ;
La Fig. 6 représente schématiquement les échanges entre les terminaux et un noeud de contrôle dans le cas d'un système de télécommunication de la Fig. 1 ;
La Fig. 7 représente schématiquement une méthode centralisée d' allocation de puissance selon un mode de réalisation de l'invention ;
La Fig. 8 représente schématiquement une méthode de détermination de l'intersection de deux courbes définies par morceaux, utile pour la méthode de la Fig. 7 ;
La Fig. 9 représente schématiquement une méthode itérative d'allocation de puissance pour une pluralité de couples de terminaux émetteur et récepteur.

## EXPOSÉ DÉTAILLÉ DE MODES DE RÉALISATION PARTICULIERS

Nous considérerons ici un système de communication sans fil comprenant une pluralité de couples de terminaux émetteur et de terminaux récepteur et supposerons qu'une communication entre les terminaux d'un couple peut interférer avec une communication entre les terminaux d'un autre couple, par exemple par ce que ces deux communications utilisent des ressources de transmission communes (interférence intra-bande). Le système de communication sans fil peut être, par exemple, un système de communication cellulaire ou un système de communication *ad hoc.*

Dans un but de simplification de la présentation, nous nous placerons tout d'abord dans le cas d'un système ne comportant que deux couples de terminaux, comme illustré en Fig. 1.

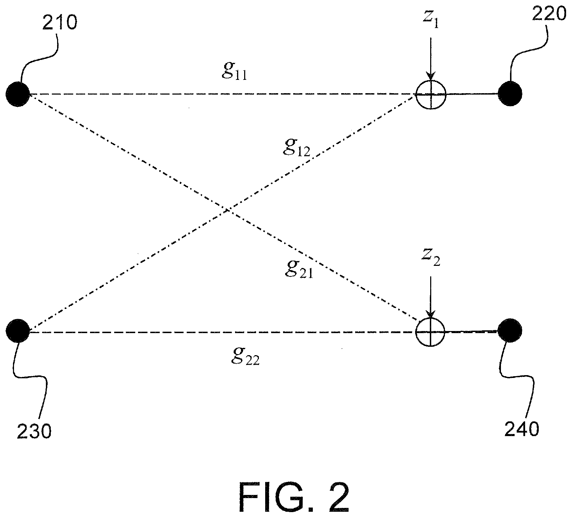

La Fig. 2 représente un modèle du système de télécommunication de la Fig. 1.

Si l'on note $x_1$, $x_2$ les signaux respectivement transmis par les terminaux émetteur 210 et 230 et $y_1$, $y_2$ les

signaux respectivement reçus par les terminaux récepteurs 220 et 240, on a :

$$y_1 = g_{11}x_1 + g_{12}x_2 + z_1$$
$$y_2 = g_{21}x_1 + g_{22}x_2 + z_2 \qquad (1)$$

où $z_1, z_2$ sont des échantillons de bruit blanc gaussien, $g_{11}, g_{21}$ sont les coefficients de canal entre le terminal émetteur 210 et les terminaux récepteurs 220 et 240, respectivement, et $g_{22}, g_{12}$ sont les coefficients de canal entre le terminal émetteur 230 et les terminaux récepteurs 240 et 220, respectivement.

On comprendra que l'interférence entre communications est représentée en (1) par les termes croisés.

Pour la première communication, les puissances respectives du signal d'information et de l'interférence due à la seconde communication sont respectivement $|g_{11}|^2 P_1$ et $|g_{12}|^2 P_2$.

On notera que ce modèle est similaire au modèle classique de canal multi-accès à deux utilisateurs dit MAC (*Multiple Access Channel*) tel que décrit par exemple dans l'article de Shih-Chun Chang et al. intitulé « Coding for T-User Multiple-Access Channels, » IEEE Transactions on Information Theory, vol. IT-25, no. 6, pp. 684-691, Nov. 1979.

Il en diffère cependant fondamentalement au sens où dans le modèle MAC, les terminaux récepteurs reçoivent une information utile et non de l'interférence sur les canaux « croisés ».

Le rapport signal à bruit (SNR) au niveau du premier récepteur peut s'exprimer sous la forme :

$$\gamma_1 = |g_{11}|^2 \frac{P_1}{N_0} \qquad (2)$$

De manière similaire, le rapport interférence à bruit au niveau du premier récepteur n'est autre que :

$$\delta_1 = |g_{12}|^2 \frac{P_2}{N_0} \qquad (3)$$

De la même façon, les rapports signal à bruit et interférence à bruit au niveau du second récepteur peuvent s'écrire respectivement comme :

$$\gamma_2 = |g_{22}|^2 \frac{P_2}{N_0} \qquad (4)$$

$$\delta_2 = |g_{21}|^2 \frac{P_1}{N_0} \qquad (5)$$

On remarquera que les relations suivantes sont vérifiées :

$$\delta_1 = f_2 \gamma_2 \qquad \text{et} \qquad \delta_2 = f_1 \gamma_1 \qquad (6)$$

où

$$f_1 = \frac{|g_{21}|^2}{|g_{11}|^2} \quad \text{et} \quad f_2 = \frac{|g_{12}|^2}{|g_{22}|^2} . \qquad (6')$$

On notera dans la suite $\rho_1$ et $\rho_2$ les débits respectifs sur la première et la seconde communications et l'on introduit les variables $C_1 = 2^{\rho_1} - 1$, $C_2 = 2^{\rho_2} - 1$ et $C_{12} = 2^{\rho_1 + \rho_2} - 1$.

Pour un couple de débits $(\rho_1, \rho_2)$ donné, on peut distinguer plusieurs régimes d'interférence, chaque régime donnant lieu à un traitement distinct. Plus précisément, si l'on considère la première communication, on peut classer l'interférence en trois régimes possibles :

Schématiquement, dans un premier régime, la puissance de l'interférence due à la seconde communication est plus faible que la puissance du signal d'information reçue au niveau du premier terminal récepteur. Plus précisément, si l'on raisonne en termes de capacité au sens de Shannon, le rapport signal sur bruit plus interférence sur le canal direct entre le terminal émetteur 210 et le terminal récepteur 220 permet de passer le débit $\rho_1$ alors que le rapport signal sur bruit sur le canal « croisé » entre le terminal émetteur 230 et le terminal récepteur 220 ne permet pas de passer le débit $\rho_2$ (le canal « croisé » est en situation de coupure au sens de la théorie de l'information), autrement dit :

$$\rho_1 \leq \log_2\left(1 + SINR_{11}\right) = \log_2\left(1 + \frac{\gamma_1}{1 + \delta_1}\right) \qquad (7)$$

et

$$\rho_2 > \log_2\left(1 + INR_{12}\right) = \log_2\left(1 + \delta_1\right) \qquad (8)$$

où $SINR_{11}$ et $INR_{12}$ sont respectivement les rapport signal à bruit plus interférence et le rapport interférence sur bruit au niveau du premier terminal récepteur.

On déduit de (7) et (8) les contraintes sur $\delta_1$ et $\gamma_1$ relatives au premier régime :

$$\gamma_1 \geq C_1\left(1 + \delta_1\right) \qquad (9)$$

$$\delta_1 < C_2 \qquad (10)$$

A l'inverse, dans un troisième régime, la puissance de l'interférence est sensiblement supérieure à celle du signal d'information reçu par le premier terminal récepteur. Etant donné que l'interférence est due à la seconde communication, il est proposé de décoder d'abord le signal d'information de la seconde communication, d'estimer à l'aide de ce signal décodé, l'interférence due à cette communication et de la soustraire du signal reçu. Le signal d'information de la première communication est ensuite décodé du signal résultant, débarrassé de l'interférence.

Dans ce régime, on considère dans une première étape le signal de la première communication comme du bruit thermique et on décode le signal d'information de la seconde communication. On se retrouve par conséquent dans une situation symétrique de celle du premier régime et l'expression (7) est à remplacer par :

$$\rho_2 \leq \log_2\left(1 + SINR_{12}\right) = \log_2\left(1 + \frac{\delta_1}{1 + \gamma_1}\right) \qquad (11)$$

où $SINR_{12}$ est le rapport « signal sur bruit » au niveau du terminal récepteur 220 dans lequel on entend le signal comme le signal d'information de la seconde communication.

Dans une seconde étape, une fois la contribution de la seconde communication soustraite du signal reçu, on se retrouve dans le cas d'un signal simplement bruité par un bruit thermique, autrement dit :

$$\rho_1 \leq \log_2\left(1 + SNR_{11}\right) = \log_2\left(1 + \gamma_1\right) \qquad (12)$$

où $SNR_{11}$ est le rapport signal sur bruit après élimination de l'interférence due à la seconde communication.

Les expressions (11) et (12) se traduisent par les contraintes suivantes sur $\gamma_1$ et $\delta_1$:

$$\gamma_1 \leq \frac{\delta_1}{C_2} - 1 \qquad (13)$$

et

$$\gamma_1 \geq C_1 \qquad (14)$$

Enfin, dans un second régime, la puissance de l'interférence est du même ordre que celle du signal d'information. Il est alors proposé de décoder conjointement le signal d'information de la première communication et le signal d'information de la seconde communication au niveau du premier terminal récepteur. Le décodage conjoint des deux signaux d'information pourra, par exemple, être effectué au moyen d'un schéma PIC ou d'une méthode de décodage à maximum de vraisemblance de type MMSE-GDFE (Minimum Mean Square Error - Generalized Decision Feedback Equalizer), de manière connue en soi.

Ce régime d'interférence est intermédiaire entre le premier et le troisième dans la mesure où le débit $\rho_2$ ne vérifie plus (8) et (11), autrement dit :

$$\log_2\left(1 + \frac{\delta_1}{1 + \gamma_1}\right) < \rho_2 \leq \log_2\left(1 + \delta_1\right) \qquad (15)$$

En revanche, le décodage conjoint suppose que les débits des première et seconde communications puissent être acheminés par le canal composé par du canal direct et du canal croisé, c'est-à-dire :

$$\rho_1 + \rho_2 \leq \log_2\left(1 + \gamma_1 + \delta_1\right) \qquad (16)$$

On déduit de (15) et (16) les contraintes sur $\gamma_1$ et $\delta_1$ relatives au second régime :

$$C_2 \leq \delta_1 < C_2\left(1 + \gamma_1\right) \qquad (17)$$

et

$$\gamma_1 \geq C_{12} - \delta_1 \qquad (18)$$

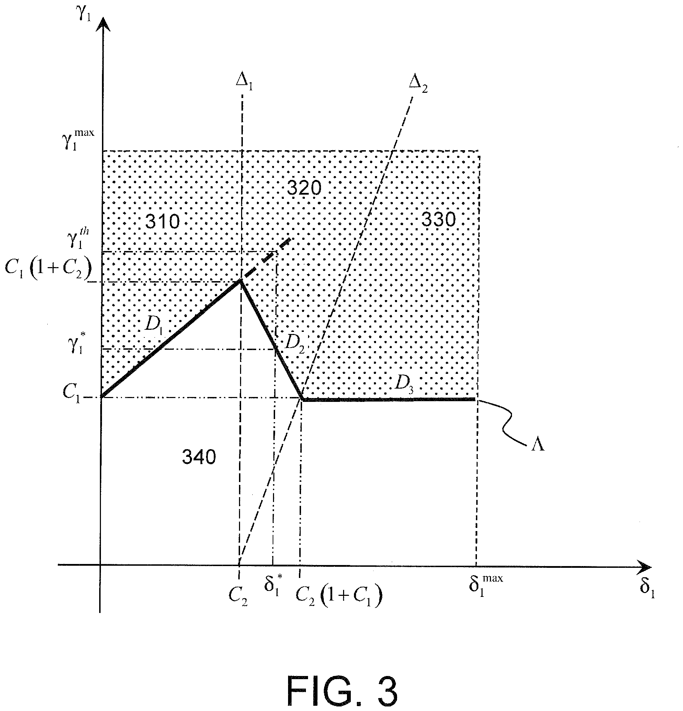

La Fig. 3 montre un diagramme d'interférence dans lequel on a représenté en abscisses le rapport interférence sur bruit $\delta_1$ et en ordonnées le rapport puissance sur bruit $\gamma_1$.

Ce diagramme est obtenu pour des valeurs données de débit $\rho_1$ et $\rho_2$, et par conséquent pour des valeurs données de $C_1, C_2, C_{12}$.

Le rapport $\gamma_1$ varie de 0 à $\gamma_1^{\max} = |g_{11}|^2 P_1^{\max} / N_0$ et le rapport $\delta_1$ varie de 0 à $\delta_1^{\max} = |g_{12}|^2 P_2^{\max} / N_0$ où $P_1^{\max}$ et $P_2^{\max}$ sont respectivement les puissances d'émission maximales des terminaux 210 et 230.

Les droites $\Delta_1$ et $\Delta_2$ définies par les équations $\delta_1 = C_2$ (cf. (10)) et $\gamma_1 = \dfrac{\delta_1}{C_2} - 1$ (cf. (13)) délimitent les trois régimes d'interférence. Les droites $D_1, D_2, D_3$, respectivement définies par les équations $\gamma_1 = C_1(1 + \delta_1)$ (cf. (9)) ; $\gamma_1 = C_{12} - \delta_1$ (cf. (18)) ; $\gamma_1 = C_1$ (cf. (14)) ; donnent la frontière inférieure de puissance, notée A, pour chacun de ces régimes. La zone 310 correspondant au premier régime d'interférence est délimitée par les droites $D_1$ et $\Delta_1$ ainsi que l'axe des ordonnées, celle correspondant au second régime d'interférence, 320, est délimitée par les droites $\Delta_1, \Delta_2$ et $D_2$, et enfin celle, 330, correspondant au troisième régime d'interférence est délimitée par $\Delta_2$ et $D_3$.

Au-dessous de la frontière inférieure $\Lambda$ se trouve une quatrième zone 340 dans laquelle il n'est pas possible de traiter l'interférence pour la qualité de service demandée, ici pour les débits $\rho_1$ et $\rho_2$. On pourra alors utiliser une autre ressource de transmission, par exemple un autre intervalle de temps de transmission pour éliminer l'interférence entre les deux communications.

Si le débit de la première ou de la seconde communication varie, les paramètres des équations des droites

$D_1$, $D_2$, $D_3$ et $\Delta_1$, $\Delta_2$ varient également et, par conséquent, les zones correspondant aux différents régimes d'interférence sont modifiées.

Pour des débits $\rho_1$ et $\rho_2$ donnés, on peut déterminer à partir d'une estimation, au niveau du récepteur, de la puissance du signal d'information, de la puissance de l'interférence et de celle du bruit thermique, dans quel régime d'interférence on se trouve, et effectuer le traitement afférent à cette zone.

En outre, comme indiqué sur la figure, pour des débits $\rho_1$ et $\rho_2$ donnés, on peut déterminer pour chaque puissance d'interférence, $\delta_1$, la plus faible valeur de $\gamma_1$, désignée ici par $\gamma_1^*$ , permettant de traiter cette interférence. Autrement dit, pour une puissance d'émission du terminal 230 donnée, on peut allouer au terminal émetteur 210 la puissance minimale $P_1^* = \dfrac{N_0}{\left|g_{11}\right|^2} \gamma_1^*$ . On remarquera que si l'on se trouve dans la zone 320 ou 330, cette valeur de puissance allouée est bien inférieure à celle, désignée ici par $\gamma_1^{th}$ , qu' il aurait été nécessaire d'allouer si l'on avait assimilé l'interférence à du simple bruit thermique.

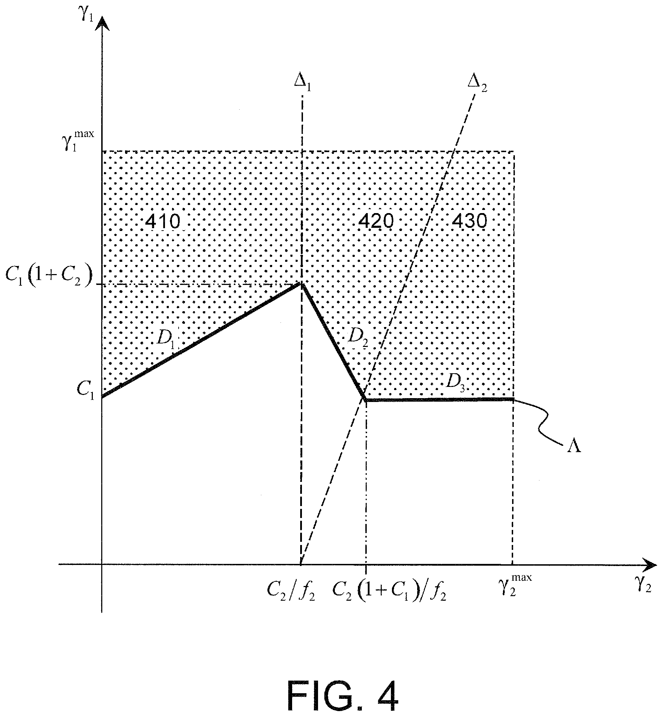

La Fig. 4 montre un diagramme d' interférence dans lequel on a représenté cette fois-ci en abscisses le rapport puissance sur bruit $\gamma_2$ et en ordonnées le rapport puissance sur bruit $\gamma_1$.

Le rapport $\gamma_1$ varie de 0 à $\gamma_1^{\max} = \left|g_{11}\right|^2 P_1^{\max} \Big/ N_0$ et le rapport $\gamma_2$ varie de 0 à $\gamma_2^{\max} = \left|g_{22}\right|^2 P_2^{\max} \Big/ N_0$ .

Les inégalités (9), (13) et (18) peuvent être réécrites en fonction de rapports $\gamma_1$ et $\gamma_2$ :

$$\gamma_1 \geq C_1\left(1 + f_2\gamma_2\right) \qquad\qquad (19)$$

$$\gamma_1 \leq \frac{f_2}{C_2}\gamma_2 - 1 \qquad\qquad (20)$$

$$\gamma_1 \geq C_{12} - f_2\gamma_2 \qquad\qquad (21)$$

De manière similaire à la Fig. 3, les droites $\Delta_1$ et $\Delta_2$ définies par les équations $\gamma_2 = C_2/f_2$ (cf. (10)) et

$\gamma_1 = \dfrac{f_2}{C_2}\gamma_2 - 1$ (cf. (20)), délimitent les trois régimes d'interférence et les droites $D_1$, $D_2$, $D_3$, respectivement définies

par les équations $\gamma_1 = C_1(1+f_2\gamma_2)$ (cf. (19)); $\gamma_1 = C_{12} - f_2\gamma_2$ (cf. (21)); $\gamma_1 = C_1$ (cf. (14)) ; donnent la frontière inférieure de puissance, $\Lambda$. Les zones correspondant aux différents régimes d'interférence sont désignées par 410, 420 et 430.

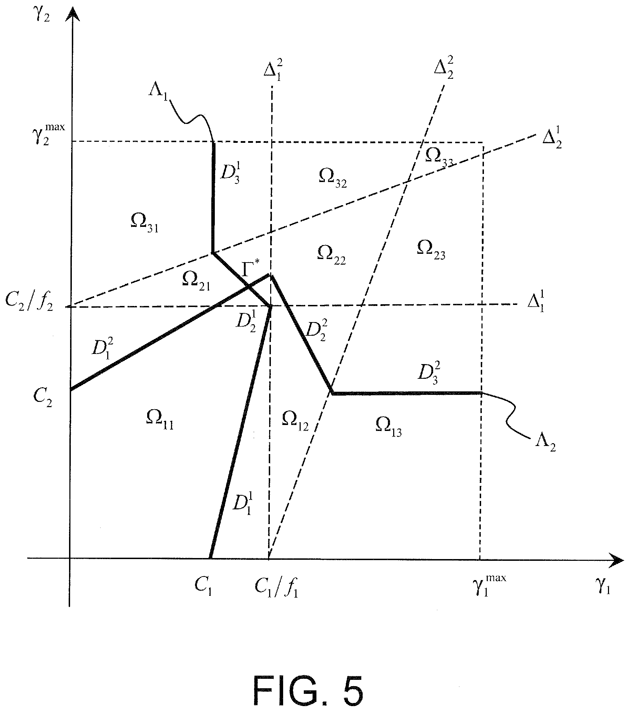

La Fig. 5 représente un diagramme d'interférence identique à celui de la Fig. 4 dans lequel on a indiqué les différents régimes d'interférence pour les deux communications. Le rapport signal à bruit $\gamma_1$, est porté en abscisses et le rapport signal à bruit $\gamma_2$ en ordonnées. On obtient neuf zones distinctes, obtenues par intersection des trois zones relatives à la première communication et des trois zones relatives à la seconde communication. Ces neuf zones sont notées $\Omega_{pq}$, $1{\leq}p{\leq}3$, $1{\leq}q{\leq}3$, où $p$ et $q$ indexent respectivement le régime d'interférence de la première et de la seconde communications. Les différentes zones sont délimitées par les droites $\Delta_1^1, \Delta_2^1, \Delta_1^2, \Delta_2^2$ , $D_1^1, D_2^1, D_3^1$ , et $D_1^2, D_2^2, D_3^2$ où l'indice supérieur indique ici la communication.

Les frontières inférieures, $\Lambda_1$ et $\Lambda_2$, relatives aux deux communications, se coupent en un point $\Gamma^* = \left(\gamma_1^*, \gamma_2^*\right)$ . Pour des débits de communication $\rho_1$ et $\rho_2$ donnés, le point $\Gamma^*$ correspond à l'allocation de puissance minimale. De manière générale, la zone $\Omega_{p^*q^*}$ dans laquelle se trouve le point $\Gamma^*$ fournit les régimes d'interférence $p^*, q^*$ des deux communications et par conséquent les types de traitement à appliquer au niveau des terminaux récepteur correspondants. On remarquera que dans le cas illustré, c'est la zone $\Omega_{21}$ qui contient le point de fonctionnement, autrement dit pour le décodage du signal d'information de la première communication, on procédera à un décodage conjoint (au niveau du premier terminal récepteur), et pour le décodage du signal d'information de la seconde communication (au niveau du second terminal récepteur), la première communication sera assimilée à du bruit thermique.

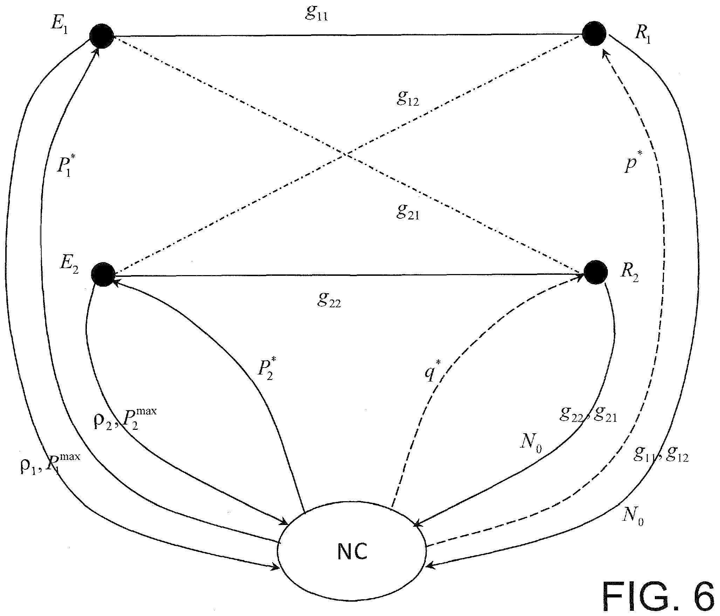

La Fig. 6 représente schématiquement les échanges entre les deux couples de terminaux $T_1 = (E_1, R_1)$, $T_2 =$

($E_2,R_2$) et le noeud de contrôle en charge de l'allocation de puissance, noté NC (Network Controller).

Les terminaux émetteurs $E_1$ et $E_2$ transmettent au noeud de contrôle leurs débits de consigne respectifs, $\rho_1$ et $\rho_2$, c'est-à-dire les débits auxquels ils souhaitent établir les première et seconde communications. Ils transmettent également si nécessaire les puissances maximales $P_1$max et $P_2$max auxquelles ils peuvent transmettre. Alternativement, ces valeurs de puissance maximale sont connues du noeud de contrôle, par exemple si elles ont été fournies par la procédure d'admission dans le réseau.

Par ailleurs, les terminaux récepteurs $R_1$ et $R_2$ estiment respectivement les coefficients de canal $g_{11},g_{12}$ et $g_{22},g_{21}$, par exemple à l'aide de symbole pilote transmis par $E_1$ et $E_2$, de manière connue en soi. Ces coefficients de canal sont ensuite transmis au noeud de contrôle NC.

Le noeud de contrôle NC reçoit (ou connaît) les puissances maximales $P_1$max et $P_2$max, les débits de consigne $\rho_1$ et $\rho_2$ ainsi que les coefficients de canal précités. Il reçoit par ailleurs des terminaux récepteur une estimation de puissance du bruit thermique $N_0$, par exemple au moyen d'une séquence de symbole pilote.

Le noeud de contrôle détermine alors les puissances d'émission $P_1^*$, $P_2^*$ à allouer respectivement aux terminaux $E_1$ et $E_2$ pour satisfaire aux débits $\rho_1$ et $\rho_2$, selon la méthode décrite plus loin. Il transmet les valeurs $P_1^*$, $P_2^*$ ainsi déterminées respectivement aux terminaux $E_1$ et $E_2$.

On comprendra que la transmission d'informations entre le noeud de contrôle NC et les terminaux $E_1$ et $E_2$, ou $R_1$ et $R_2$ pourra avoir lieu via une liaison filaire ou une liaison radio selon le cas. Par exemple, si $E_1$ et $E_2$ sont des stations de base et $R_1$ et $R_2$, les informations échangées avec les premières pourront être transportées par le réseau de *backhaul* alors que les informations échangées avec les secondes pourront être transportées grâce à des canaux radio auxiliaires.

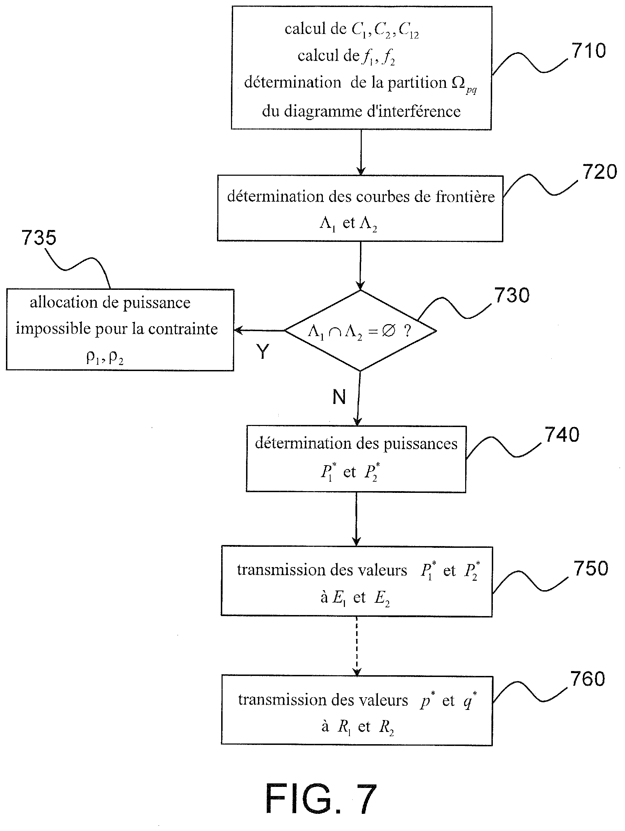

La Fig. 7 représente une méthode centralisée d'allocation de puissance selon un premier mode de réalisation de l'invention. Ce mode de réalisation suppose que deux couples de terminaux $T_1 = (E_1,R_1)$, $T_2 = (E_2,R_2)$ aient été préalablement sélectionnés parce que leurs communications interfèrent entre elles.

A l'étape 710, le noeud de contrôle calcule d'abord les variables $C_1,C_2,C_{12}$ à partir des débits $\rho_1$ et $\rho_2$ et les facteurs $f_1,f_2$ à partir des coefficients de canal. Il en déduit ensuite une partition du diagramme d'interférence relatif aux deux communications. Plus précisément, pour chaque communication $i = 1,2$, il détermine d'abord une partition $\left(\omega_1^i, \omega_2^i, \omega_3^i\right)$ du diagramme d'interférence définie par :

$$\omega_1^i \triangleq \left\{\left(\gamma_i,\gamma_j\right)\middle|0 < \gamma_j \leq C_j/f_j\right\} \qquad (22)$$

$$\omega_2^i \triangleq \left\{\left(\gamma_i,\gamma_j\right)\middle| C_j/f_j \leq \gamma_j \leq \left(\gamma_i+1\right)C_j/f_j\right\} \qquad (23)$$

$$\omega_3^i \triangleq \left\{\left(\gamma_i,\gamma_j\right)\middle|\gamma_j > \left(\gamma_i+1\right)C_j/f_j\right\} \qquad (24)$$

où $j \neq i$ est l'indice de la communication interférente.

La partition du diagramme d'interférence pour les deux communications est obtenue au moyen des intersections :

$$\Omega_{pq} = \omega_p^1 \cap \omega_q^2 \qquad (25)$$

Chaque zone est associée à un régime d'interférence (indexé par $p$) de la première communication et à un régime d'interférence (indexé par $q$) de la seconde communication.

A l'étape 720, le noeud de contrôle détermine, pour chaque communication, la courbe donnant la borne inférieure de puissance compatible avec le traitement de l'interférence, dans chacune des zones $\left(\omega_1^i, \omega_2^i, \omega_3^i\right)$.

Plus précisément, pour la communication $i$ la courbe $\Lambda_i$ donnant la borne inférieure de puissance est définie par intervalles :

$$\gamma_i = C_i\left(1 + f_j \gamma_j\right) \quad \text{pour} \quad 0 \leq \gamma_j \leq C_j / f_j \qquad (26)$$

$$\gamma_i = C_{ij} - f_j \gamma_j \quad \text{pour} \quad C_j / f_j \leq \gamma_j \leq C_j\left(1 + C_i\right) / f_j \qquad (27)$$

$$\gamma_i = C_i \quad \text{pour} \quad C_j\left(1 + C_i\right) / f_j \leq \gamma_j \leq \gamma_j^{\max} \qquad (28)$$

Chaque courbe $\Lambda_i$ est donc constituée de trois segments, respectivement définis par (26), (27) et (28). Les segments de $\Lambda_1$ sont notés $\lambda_1^p$ , $p$ = 1,2,3 et ceux de $\Lambda_2$ sont notés $\lambda_2^q$ , $q$ = 1,2,3. On comprendra que, selon la valeur de $\gamma_j^{\max}$ , deux voire un seul intervalle (s) puisse(n)t exister.

A l'étape 730, le noeud de contrôle détermine si les courbes $\Lambda_1$ et $\Lambda_2$ se coupent dans le pavé $\left[0, \gamma_1^{\max}\right] \times \left[0, \gamma_2^{\max}\right]$ ou de manière plus générale dans un pavé $\left[\gamma_1^{\min}, \gamma_1^{\max}\right] \times \left[\gamma_2^{\min}, \gamma_2^{\max}\right]$ où $\gamma_1^{\min}$ et $\gamma_2^{\min}$ sont des valeurs de rapport signal à bruit correspondant à des valeurs minimales de puissance prédéterminées. Par exemple, on pourra avoir $\gamma_1^{\min} = \gamma_2^{\min} = 0$ . Si les courbes ne se coupent pas, aucune allocation de puissance respectant les contraintes de débit ne peut être effectuée, compte tenu des conditions d'interférence. Le noeud de contrôle NC détecte cette situation et en informe les terminaux $E_1, E_2$. Dans ce cas, une stratégie alternative doit être adoptée. Par exemple, l'un et/ou l'autre des terminaux peu(ven)t requérir un débit de consigne plus faible. Alternativement, des ressources de transmission orthogonales (intervalles de transmission distincts, intervalles de sous-porteuses distincts, etc.) peuvent être allouées aux deux communications en question de manière à éliminer l'interférence.

A l'étape 740, lorsque les courbes $\Lambda_1$ et $\Lambda_2$ se coupent dans le pavé $\left[\gamma_1^{\min}, \gamma_1^{\max}\right] \times \left[\gamma_2^{\min}, \gamma_2^{\max}\right]$ , on détermine les coordonnées du point d'intersection $\Gamma^* = \left(\gamma_1^*, \gamma_2^*\right)$ . Ce point se trouve dans la zone d' interférence $\Omega_{p^*q^*}$.

La valeur $\gamma_1^*$ permet de calculer la puissance minimale d'émission à allouer au terminal $E_1$ :

$$P_1^* = \frac{N_0}{|g_{11}|^2} \gamma_1^* \qquad (29)$$

et de la même façon la valeur $\gamma_2^*$ permet de calculer la puissance à allouer au terminal $E_2$ :

$$P_2^* = \frac{N_0}{|g_{22}|^2} \gamma_2^* \qquad (30)$$

Par ailleurs, les indices $p^*$ et $q^*$ donnent le type de traitement de l'interférence à adopter pour les terminaux $R_1$ et $R_2$.

A l'étape 750, le noeud de contrôle informe les terminaux $E_1$ et $E_2$ des puissances allouées $P_1^*$ et $P_2^*$ . Le cas échéant, il transmet également en 760 aux terminaux $R_1$ et $R_2$ les types $p^*$ et $q^*$ de traitement de l'interférence que ceux-ci auront à effectuer. On notera que cette dernière transmission, bien qu'avantageuse, est facultative, comme indiqué en traits discontinus en Figs. 6 et 7. En effet, les terminaux $R_1$ et $R_2$ peuvent estimer la puissance du signal d'information qui leur est destiné ainsi que la puissance du signal interférent pour en déduire de manière autonome dans quel régime d'interférence ils se trouvent.

Les étapes 720 et 730 décrites précédemment permettent de déterminer l'intersection des courbes $\Lambda_1$ et $\Lambda_2$. Cette intersection peut être obtenue de différentes manières par exemple en minimisant une fonction de coût grâce à l'algorithme du simplexe.

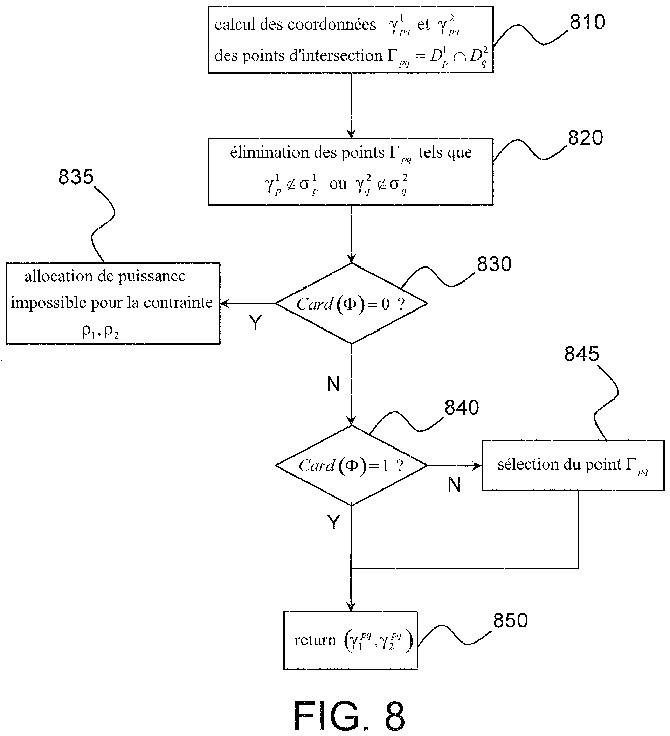

Avantageusement, on pourra procéder à une résolution directe comme expliqué en relation avec la Fig. 8.

La Fig. 8 représente de manière schématique l'ordinogramme d'une méthode permettant de déterminer de manière simple l'intersection des courbes $\Lambda_1$ et $\Lambda_2$ dans le pavé $\left[\gamma_1^{\min},\gamma_1^{\max}\right]\times\left[\gamma_2^{\min},\gamma_2^{\max}\right]$, si elle existe.

Comme on l'a vu plus haut, chaque courbe $\Lambda_i$ relative à la communication $E_i$ et $R_i$, est en général composée de trois segments de droite définis par (26), (27), (28). Les intervalles sur lesquels est définie la courbe $\Lambda_1$ sont notés $\sigma_p^2$, $p$ = 1,2,3, avec :

$$\sigma_1^2 = \left[\gamma_2^{\min}, C_2/f_2\right]$$

$$\sigma_2^2 = \left[C_2/f_2, C_2\left(1+C_1\right)/f_2\right]$$

$$\sigma_3^2 = \left[C_2\left(1+C_1\right)/f_2, \gamma_2^{\max}\right] \qquad (31)$$

et, de même la courbe $\Lambda_2$ est définie sur les intervalles $\sigma_q^2$, $q$ = 1,2,3 :

$$\sigma_1^1 = \left[\gamma_1^{\min}, C_1/f_1\right]$$

$$\sigma_2^1 = \left[C_1/f_1, C_1\left(1+C_2\right)/f_1\right]$$

$$\sigma_3^1 = \left[C_1\left(1+C_2\right)/f_1, \gamma_1^{\max}\right] \qquad (32)$$

Si l'on considère, d'une part, les droites $D_1^1, D_2^1, D_3^1$, respectivement définies par les équations :

$$\gamma_1 = C_1\left(1+f_2\gamma_2\right)$$

$$\gamma_1 = C_{12} - f_2\gamma_2$$

$$\gamma_1 = C_1 \qquad (33)$$

et, d'autre part, les droites $D_1^2, D_2^2, D_3^2$, respectivement définies par les équations :

$$\gamma_2 = C_2\left(1+f_1\gamma_1\right)$$

$$\gamma_2 = C_{12} - f_1\gamma_1$$

$$\gamma_2 = C_2 \qquad (34)$$

on peut facilement calculer les neufs points d'intersection $\Gamma_{pq} = D_p^1 \cap D_q^2$, avec $p$ = 1,2,3 et $q$ = 1,2,3. On note $\Phi$ l'ensemble des points d'intersection.

Les coordonnées $\gamma_1^{pq}$ et $\gamma_2^{pq}$ de ces neuf points d'intersection sont calculées à l'étape 810.

A l'étape 820, on vérifie que les coordonnées $\gamma_1^{pq}$ et $\gamma_2^{pq}$ des points $\Gamma_{pq}$ appartiennent respectivement aux

intervalles $\sigma_p^1$ et $\sigma_q^2$, autrement dit qu'il s'agit bien d'une intersection des segments $\lambda_p^1$ et $\lambda_q^1$. Les points $\Gamma_{pq}$ ne vérifiant pas cette condition sont éliminés de $\Phi$.

A l'étape 830, on détermine si l'ensemble $\Phi$ est vide. Si c'est le cas, on conclut en 835 à l'impossibilité d'une allocation de puissance respectant les contraintes de débit $\rho_1$ et $\rho_2$ et l'on adopte une stratégie alternative comme expliqué plus haut.

Sinon, on vérifie en 840 que l'ensemble $\Phi$ est réduit à un singleton.

Dans l'affirmative, on retourne les coordonnées de ce point en 850.

En revanche, si $\Phi$ contient plusieurs points d'intersection, on en sélectionne un en 845 selon un critère prédéterminé, par exemple celui qui conduira à la plus faible somme de puissances d'émission pour $E_1$ et $E_2$, ou bien encore qui conduira au traitement de l'interférence le plus simple dans $R_1$ et $R_2$. On retourne là-encore les coordonnées du point sélectionné en 850.

La méthode d'allocation de puissance selon l'invention se généralise à un nombre quelconque $K$ de couples de terminaux et donc à un nombre $K$ de communications correspondantes. Le diagramme d'interférence de la Fig. 4 ou 5 est alors construit dans un espace à $K \geq 2$ dimensions et l'on a $P^K$ combinaisons possibles de $P$ régimes d'interférence pour l'ensemble des $K$ communications du système. Les consignes de débit des $K$ communications forment un vecteur de débit $\rho = (\rho_1,...,\rho_K)^T$. Le problème de l'allocation de puissance est alors de trouver le point $\Gamma^*$ de coordonnées $\left(\gamma_1^*,...\gamma_K^*\right)$ permettant d'acheminer les débits en question avec la plus faible consommation d'énergie possible. Ce point s'obtient par intersection de $PK$ hyperplans dans l'espace à $K$ dimensions des rapports signal à bruit $\gamma_1,...,\gamma_K$. On notera que, dans le cas $K = 2$, un hyperplan correspond à une droite telle que définie en (33) ou (34). On obtient alors $P^K$ candidats possibles et on procède à une étape d'élimination et, si nécessaire, de sélection, comme expliqué précédemment.

Le nombre $P^K$ pouvant être très élevé, on peut opter pour des variantes sous-optimales mais plus simples à mettre en oeuvre.

Selon une première variante, on regroupe les couples de terminaux émetteur et récepteur, $T_k = (E_k,R_k)$, $k = 1,...,K$ par paires selon un critère prédéterminé. Par exemple, ce critère peut être un ordre de priorité, un degré d'urgence, un facteur de qualité de canal, etc. ou encore une combinaison de tels critères.

Si le critère de sélection est un facteur de qualité de canal, on sélectionne de préférence, pour un couple $T_k$ donné, le couple $T_{k'}$ tel que le rapport $\tilde{f}_k^{k'} = \dfrac{|g_{kk'}|}{|g_{kk}|}$ est le plus élevé où $g_{kk'}$ est le coefficient du canal « croisé » entre $E_{k'}$ et $R_k$ et $g_{kk}$ est le coefficient du canal direct entre $E_k$ et $R_k$. En effet, on comprend que la communication $k'$ du couple $T_{k'}$ est celle qui sera susceptible d'interférer le plus fortement la communication $k$. Les couples $T_k$ et $T_{k'}$ sont alors appariés.

Pour une paire $(T_k,T_{k'})$ ainsi constituée, on pourra considérer que les autres paires ne sont que faiblement interférentes. L'interférence « résiduelle » due aux autres communications sera traitée comme du bruit thermique. Ce bruit thermique sera pris en compte dans la valeur de $N_0$ pour le calcul des puissances $P_k^*$ et $P_{k'}^*$ à allouer aux terminaux $E_k$ et $E_{k'}$.

Afin de s'assurer que cette hypothèse est bien vérifiée, on pourra allouer une puissance nulle, ou bien encore une puissance minimale $P^{min}$, aux autres terminaux $E_v$, $v \neq k,k'$ pendant que les communications $k$ et $k'$ seront actives.

Le procédé de sélection de la paire active $(T_k,T_{k'})$ peut être répété périodiquement, notamment pour tenir compte de l'évolution des coefficients de canal. Il peut être également répété pour respecter un principe d'équité, les couples constitutifs de la paire sélectionnée en dernier lieu étant alors exclus du processus de sélection pendant une période donnée. Cette période d'exclusion peut être fonction de la qualité de service requise pour la communication en question, une qualité de service d'autant plus élevée conduisant à une période d'exclusion d'autant plus courte.

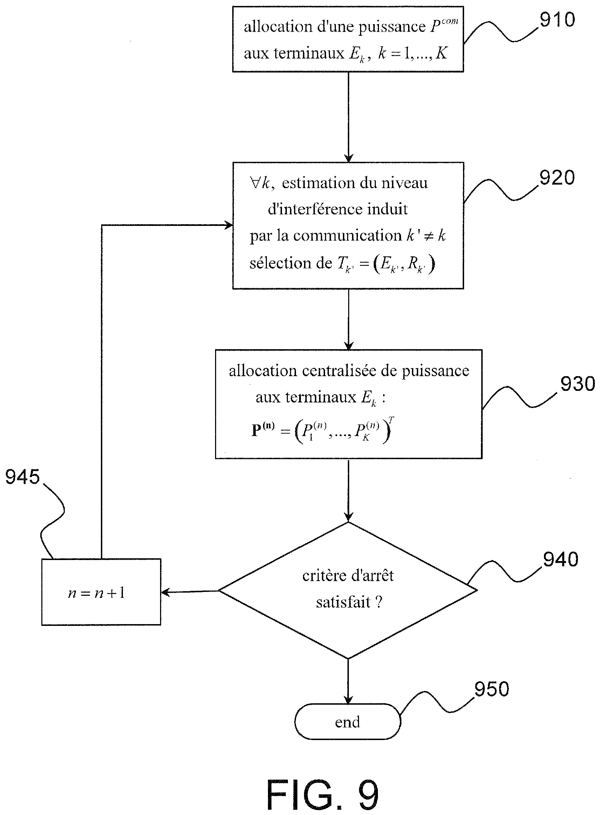

Selon une autre variante de réalisation, illustrée en Fig. 9, on procède à une allocation de puissance de manière itérative.

On considère à nouveau une pluralité $K$ de couples de terminaux $T_k = (E_k,R_k)$, $R_k$ étant en communication $k$ avec $E_k$.

Dans une première étape, 910, on alloue à tous les terminaux émetteurs $E_k$, $k = 1,..,K$ une même puissance de transmission initiale, $P^{com}$. On entre ensuite dans une boucle d'itération.

A l'étape 920, chaque terminal $R_k$ mesure le niveau d'interférence induit par chacune des communications $k' \neq k$. On pourra notamment mesurer ces niveaux d'interférence à l'aide de courtes séquences de symboles pilote, émises à tour de rôle par les terminaux $E_{k'}$, $k' \neq k$. On sélectionne le couple de terminaux $T_{k'} = (E_{k'},R_{k'})$ induisant le niveau d'interférence le plus élevé et on apparie $T_k$ et $T_{k'}$.

A l'étape 930, on effectue pour chaque paire $(T_k, T_{k'})$ une allocation de puissance selon la méthode illustrée Fig. 7. Toutefois, l'interférence induite par les autres communications $\tilde{k} \neq k, k'$ est ici prise en compte comme du bruit thermique. Plus précisément, la puissance de bruit thermique $N_0$ intervenant dans les expressions (2) à (5) est alors majorée de la puissance de l'interférence induite par les communications $\tilde{k} \neq k, k'$. Au terme de cette étape, chacun des terminaux émetteurs transmet avec la puissance qui lui a été allouée, ce qui modifie le niveau de l'interférence sur les différentes communications.

Les étapes 920 et 930 sont répétées jusqu'à ce qu'un critère d'arrêt soit satisfait.

Ce critère d'arrêt peut être libellé sous la forme d'un nombre maximal d'itérations $N^{\max}$.

Alternativement, le critère d'arrêt peut être une mesure de convergence. Par exemple, si l'on note $P_k^{(n)}$ la puissance d'émission allouée au terminal $E_k$ à l'itération $n$, ce critère pourra être exprimé par :

$$\left\| \mathbf{P^{(n+1)}} - \mathbf{P^{(n)}} \right\| \leq \varepsilon \qquad\qquad (35)$$

où $P^{(n)}$ est le vecteur des puissances allouées aux terminaux à l'itération $n$, c'est-à-dire $\mathbf{P^{(n)}} = \left( P_1^{(n)}, ..., P_K^{(n)} \right)^T$ et $\varepsilon$ où est une valeur de seuil prédéterminée.

On teste en 940 si le critère d'arrêt est vérifié. Dans la négative, on poursuit le procédé en 920. Dans l'affirmative, on termine en 950. Les dernières valeurs de puissance d'émission $P_1^{(last\_n)}, ..., P_K^{(last\_n)}$ restent allouées aux terminaux $E_k$.

Dans le cas où le procédé itératif d'allocation de puissance ne convergerait pas, on pourra scinder l'ensemble des couples $(T_k, T_{k'})$ en sous-ensembles, tels que la communication associée à un couple quelconque d'un premier sous-ensemble interfère peu avec la communication associée à un couple quelconque d'un second sous-ensemble. Le procédé itératif d'allocation de puissance est alors appliqué indépendamment à chaque sous-ensemble.

La présente invention a été décrite comme une méthode centralisée d'allocation de puissance respectant une contrainte de débit donnée. L'homme du métier comprendra cependant qu'elle peut s'appliquer à une allocation de puissance respectant une contrainte portant sur un paramètre quelconque de qualité de service, par exemple un temps de latence maximal, un rayon de couverture minimal, un taux d'erreur maximal, etc. sans pour autant sortir du cadre de la présente invention.

**Revendications**

1. Méthode d'allocation de puissance pour système de télécommunication sans fil comprenant au moins un premier couple de terminaux constitué d'un premier terminal émetteur et d'un premier terminal récepteur et d'un second couple de terminaux constitué d'un second terminal émetteur et d'un second terminal récepteur, une première communication entre les terminaux du premier couple utilisant les mêmes ressources de transmission qu'une seconde communication entre les terminaux du second couple, de sorte que les deux communications interfèrent entre elles, la première communication devant respecter un premier débit de consigne ($\rho_1$) et la seconde communication devant respecter un second débit de consigne ($\rho_2$), **caractérisée en ce qu'**un noeud de contrôle :

   - détermine (710), à partir d'une estimation des coefficients de canal entre les terminaux émetteur et récepteur, et pour une première plage de puissance d'émission du terminal émetteur, et une seconde plage de puissance d'émission du second terminal émetteur, une partition d'un diagramme d'interférence des première et seconde communications, en différentes zones, ledit diagramme d'interférence donnant le rapport signal sur bruit du premier récepteur en fonction du rapport signal sur bruit du second récepteur, chaque zone dudit diagramme correspondant à un type de traitement distinct de l'interférence par les premier et second terminaux récepteurs;
   - calcule (720), pour chaque communication, la courbe de puissance d'émission minimale permettant d'effectuer le traitement de l'interférence dans chacune desdites zones, compte tenu des premier et second débits de consigne ;
   - détermine (720, 730), s'il existe, le point d'intersection desdites courbes de puissance d'émission minimale relatives aux première et seconde communications ;

   - déduit (740) des coordonnées de ce point d'intersection dans le diagramme d'interférence, une première et une seconde valeurs de puissance d'émission $\left(P_1^*, P_2^*\right)$ à allouer respectivement aux premier et second terminaux émetteurs ;

- transmet (750) les première et seconde valeurs de puissance respectivement aux premier et second terminaux émetteurs.

2. Méthode d'allocation de puissance selon la revendication 1, **caractérisée en ce que** ledit noeud de contrôle, détermine en outre dans quelle zone de ladite partition se trouve ledit point d'intersection, en déduit les premier et second types d'interférence ($p^*, q^*$) pour la première et la seconde communications, et transmet (760) lesdits premier et second types respectivement aux premier et second terminaux récepteurs.

3. Méthode d'allocation de puissance selon la revendication 1 ou 2, **caractérisée en ce que**, si l'intersection des courbes de puissance d'émission minimale, relatives aux première et seconde communications, est vide, le noeud de contrôle avertit les premier et second terminaux émetteurs de l'impossibilité d'une allocation de puissance pour lesdites valeurs de débit.

4. Méthode d'allocation de puissance selon l'une des revendications précédentes, **caractérisée en ce que** lesdites courbes de puissance d'émission minimale sont définies par intervalles et constituées par des parties de droites sur ces intervalles, et que le noeud de contrôle détermine l'intersection entre les courbes de puissance en recherchant les points d'intersection entre les droites relatives à la première courbe et les droites relatives à la seconde courbe, en éliminant de l'ensemble de points d'intersection ainsi obtenus, ceux qui n'appartiennent pas aux segments correspondants, et en sélectionnant un point au sein de l'ensemble des points restants selon un critère prédéterminé.

5. Méthode d'allocation de puissance selon la revendication 4, **caractérisée en ce que** ledit critère est la puissance d'émission minimale pour la première et/ou la seconde communication(s).

6. Méthode d'allocation de puissance selon la revendication 4, **caractérisée en ce que** ledit critère est la somme minimale des puissances d'émission des première et seconde communications.

7. Méthode d'allocation de puissance selon la revendication 4, **caractérisée en ce que** ledit critère est la complexité minimale des traitements d'interférence pour la première et/ou la seconde communication(s).

8. Méthode d'allocation de puissance selon l'une des revendications précédentes, **caractérisée en ce que** chaque terminal récepteur estime les coefficients de canal entre les terminaux émetteurs et lui-même, et transmet les coefficients ainsi estimés au noeud de contrôle.

9. Méthode d'allocation de puissance selon l'une des revendications précédentes, **caractérisée en ce que** chaque terminal émetteur transmet au noeud de contrôle la valeur de débit de la communication correspondante ($\rho_1, \rho_2$) ainsi que la puissance maximale à laquelle il peut émettre $\left(P_1^{\max}, P_2^{\max}\right)$.

10. Méthode d'allocation de puissance pour système de télécommunication sans fil comprenant une pluralité de couples de terminaux, chaque couple étant constitué d'un terminal émetteur et d'un terminal récepteur, **caractérisée en ce qu'**un noeud de contrôle alloue initialement (910) la même puissance d'émission ($P^{com}$) aux terminaux émetteurs desdits couples, que pour une communication, dite première communication entre les terminaux émetteur et récepteur d'un couple, dit premier couple, on détermine dans une première étape (920) la communication, dite seconde communication, entre les terminaux émetteur et récepteur du couple, dit second couple, qui induit le plus fort niveau d'interférence sur la première communication, et que l'on effectue, dans une seconde étape (930), l'allocation de puissance aux premier et second terminaux émetteurs desdites première et seconde communications au moyen de la méthode d'allocation selon l'une des revendications précédentes, lesdites première et seconde étapes étant répétées jusqu'à ce qu'un critère d'arrêt prédéterminé (940) soit satisfait.

11. Méthode d'allocation de puissance selon la revendication 10, **caractérisée en ce que** le critère d'arrêt est un nombre maximal d'itérations.

12. Méthode d'allocation de puissance selon la revendication 10, **caractérisée en ce que** le critère d'arrêt est un critère de convergence des puissances successives allouées aux terminaux émetteurs des couples de ladite pluralité.

**13.** Méthode d'allocation de puissance selon la revendication 12, **caractérisée en ce que** si le critère de convergence n'est pas satisfait au bout d'un nombre prédéterminé d'itérations, on attribue à la seconde communication entre les terminaux du second couple des ressources de transmission différentes de celles utilisées par la première communication entre les terminaux du premier couple.

**14.** Méthode d'allocation de puissance pour système de télécommunication sans fil comprenant une pluralité de couples de terminaux, chaque couple étant constitué d'un terminal émetteur et d'un terminal récepteur, **caractérisée en ce que** l'on apparie lesdits couples selon un critère d'appariement prédéterminé, que, pour chaque paire ainsi constituée d'un premier et d'un second couples, on applique la méthode d'allocation de puissance selon l'une des revendications 1 à 9, l'interférence due aux communications autres que celles des premier et second couples étant prise en compte comme du bruit thermique dans ladite méthode d'allocation.

**15.** Méthode d'allocation de puissance selon la revendication 14, **caractérisée en ce que** ledit critère d'appariement est un degré d'urgence, un ordre de priorité ou un facteur de qualité de canal de transmission.

**16.** Méthode d'allocation de puissance selon la revendication 14 ou 15, **caractérisée en ce que** les puissances d'émission allouées aux terminaux émetteurs des couples de ladite pluralité autres que lesdits premier et second couples sont fixées à une valeur minimale prédéterminée ($P^{min}$).

**Patentansprüche**

**1.** Verfahren zur Allokation von Leistung für ein drahtloses Telekommunikationssystem, umfassend wenigstens ein erstes Paar von Terminals, gebildet durch ein erstes Sendeterminal und ein erstes Empfangsterminal, sowie ein zweites Paar von Terminals, gebildet durch ein zweites Sendeterminal und ein zweites Empfangsterminal, wobei eine erste Kommunikation zwischen den Terminals des ersten Paars die gleichen Senderessourcen verwendet wie eine zweite Kommunikation zwischen den Terminals des zweiten Paars, derart, dass die zwei Kommunikationen miteinander interferieren, wobei die erste Kommunikation eine erste Sollrate ($\rho_1$) respektieren soll, und die zweite Kommunikation eine zweite Sollrate ($\rho_2$) respektieren soll, **dadurch gekennzeichnet, dass** ein Steuerknoten Folgendes ausführt:

- er bestimmt (710), ausgehend von einer Abschätzung der Kanalkoeffizienten zwischen den Sende- und Empfangsterminals, und für einen ersten Bereich einer Sendeleistung des Sendeterminals, sowie für einen zweiten Bereich einer Sendeleistung des zweiten Sendeterminals, eine Partition eines Interferenzdiagramms der ersten und der zweiten Kommunikation in unterschiedliche Zonen, wobei das Interferenzdiagramm das Signal/Rausch-Verhältnis des ersten Empfängers als Funktion des Signal/Rausch-Verhältnisses des zweiten Empfängers angibt, wobei jede Zone des Diagramms einem anderen Behandlungstyp der Interferenz durch das erste und das zweite Empfangsterminal entspricht;
- er berechnet (720), für jede Kommunikation, die Kurve der minimalen Sendeleistung, die die Durchführung der Bearbeitung der Interferenz in jeder der Zonen erlaubt, unter Berücksichtigung der ersten und der zweiten Sollrate;
- er bestimmt (720, 730), falls existent, den Schnittpunkt der Kurven der minimalen Sendeleistung bezüglich der ersten und der zweiten Kommunikation;
- aus den Koordinaten dieses Schnittpunkts in dem Interferenzdiagramm leitet er einen ersten und einen zweiten Sendeleistungswert $\left(P_1^*, P_2^*\right)$ her (740), der dem ersten beziehungsweise dem zweiten Sendeterminal zuzuweisen ist;
- er überträgt (750) den ersten und den zweiten Leistungswert an das erste beziehungsweisen zweite Sendeterminal.

**2.** Verfahren zur Allokation von Leistung nach Anspruch 1, **dadurch gekennzeichnet, dass** der Steuerknoten ferner bestimmt, in welcher Zone der Partition sich der Schnittpunkt befindet, hieraus den ersten und den zweiten Interferenztyp ($p^*, q^*$) für die erste und die zweite Kommunikation herleitet, und den ersten und den zweiten Typ an das erste beziehungsweise zweite Empfangsterminal überträgt (760).

**3.** Verfahren zur Allokation von Leistung nach Anspruch 1 oder 2, **dadurch gekennzeichnet, dass** dann, wenn der Schnitt der Kurven der minimalen Sendeleistung bezüglich der ersten und zweiten Kommunikation leer ist, der Steuerungsknoten das erste und zweite Sendeterminal hinsichtlich der Unmöglichkeit einer Allokation von Leistung für die Ratenwerte warnt.

4. Verfahren zur Allokation von Leistung nach einem der vorhergehenden Ansprüche, **dadurch gekennzeichnet, dass** die Kurven der minimalen Sendeleistung durch Intervalle definiert sind und durch Bereiche von Geraden auf diesen Intervallen gebildet sind, und dass der Steuerungsknoten den Schnitt zwischen den Leistungskurven bestimmt, indem er die Schnittpunkte zwischen den Geraden bezüglich der ersten Kurve und den Geraden bezüglich der zweiten Kurve sucht, wobei er von der Gesamtheit von derart erhaltenen Schnittpunkten jene eliminiert, die nicht zu den entsprechenden Segmenten gehören, und einen Punkt innerhalb der Gesamtheit der verbleibenden Punkte gemäß einem vorbestimmten Kriterium auswählt.

5. Verfahren zur Allokation von Leistung nach Anspruch 4, **dadurch gekennzeichnet, dass** das Kriterium die minimale Sendeleistung für die erste und/oder die zweite Kommunikation ist.

6. Verfahren zur Allokation von Leistung nach Anspruch 4, **dadurch gekennzeichnet, dass** das Kriterium die minimale Summe der Sendeleistungen der ersten und der zweiten Kommunikation ist.

7. Verfahren zur Allokation von Leistung nach Anspruch 4, **dadurch gekennzeichnet, dass** das Kriterium die minimale Komplexität der Interferenzbearbeitungen für die erste und/oder die zweite Kommunikation ist.

8. Verfahren zur Allokation von Leistung nach einem der vorhergehenden Ansprüche, **dadurch gekennzeichnet, dass** jedes Empfangsterminal die Kanalkoeffizienten zwischen den Sendeterminals und sich selbst abschätzt, und die derart abgeschätzten Koeffizienten an den Steuerungsknoten überträgt.

9. Verfahren zur Allokation von Leistung nach einem der vorhergehenden Ansprüche, **dadurch gekennzeichnet, dass** jedes Sendeterminal an den Steuerungsknoten den Ratenwert der entsprechenden Kommunikation ($\rho_1$, $\rho_2$)

sowie die maximale Leistung überträgt, bei der es senden kann $\left(P_1^{max}, P_2^{max}\right)$.

10. Verfahren zur Allokation von Leistung für ein drahtloses Telekommunikationssystem, umfassend eine Mehrzahl von Paaren von Terminals, wobei jedes Paar gebildet ist durch ein Sendeterminal und ein Empfangsterminal, **dadurch gekennzeichnet, dass** ein Steuerungsknoten anfänglich die gleiche Sendeleistung ($P^{com}$) an die Sendeterminals der Paare zuweist (910), dass für eine Kommunikation, genannt erste Kommunikation zwischen dem Sende- und dem Empfangsterminal eines Paars, genannt erstes Paar, man in einem ersten Schritt (920) die Kommunikation, genannt zweite Kommunikation, zwischen dem Sende- und dem Empfangsterminal des Paars, genannt zweites Paar, bestimmt, die das stärkste Interferenzniveau bei der ersten Kommunikation induziert, und dass man in einem zweiten Schritt (930) die Allokation von Leistung zu dem ersten und dem zweiten Sendeterminal der ersten und der zweiten Kommunikation durchführt (930) mit Hilfe des Verfahrens zur Allokation nach einem der vorhergehenden Ansprüche, wobei der erste und der zweite Schritt wiederholt werden, bis ein vorbestimmtes Anhaltekriterium (940) erfüllt ist.

11. Verfahren zur Allokation von Leistung nach Anspruch 10, **dadurch gekennzeichnet, dass** das Anhaltekriterium eine maximale Zahl von Iterationen ist.

12. Verfahren zur Allokation von Leistung nach Anspruch 10, **dadurch gekennzeichnet, dass** das Anhaltekriterium ein Konvergenzkriterium der sukzessiven Leistungen ist, die den Sendeterminals der Paare der Mehrzahl zugewiesen werden.

13. Verfahren zur Allokation von Leistung nach Anspruch 12, **dadurch gekennzeichnet, dass** dann, wenn das Konvergenzkriterium am Ende einer vorbestimmten Zahl von Iterationen nicht erfüllt ist, man der zweiten Kommunikation zwischen den Terminals des zweiten Paars Senderessourcen zuordnet, die verschieden sind von jenen, die für die erste Kommunikation zwischen den Terminals des ersten Paars verwendet werden.

14. Verfahren zur Allokation von Leistung für ein drahtloses Telekommunikationssystem, umfassend eine Mehrzahl von Paaren von Terminals, wobei jedes Paar gebildet ist durch ein Sendeterminal und ein Empfangsterminal, **dadurch gekennzeichnet, dass** man die Paare gemäß einem vorbestimmten Paarungskriterium paart, dass man für jedes derart gebildete Paar aus einem ersten und einem zweiten Paar das Verfahren zur Allokation von Leistung nach einem der Ansprüche 1 bis 9 anwendet, wobei die Interferenz aufgrund der anderen Kommunikationen als jenen des ersten und des zweiten Paars in dem Verfahren zur Allokation als thermisches Rauschen berücksichtigt wird.

**15.** Verfahren zur Allokation von Leistung nach Anspruch 14, **dadurch gekennzeichnet, dass** das Paarungskriterium ein Dringlichkeitsgrad, eine Prioritätsreihenfolge oder ein Qualitätsfaktor des Sendekanals ist.

**16.** Verfahren zur Allokation von Leistung nach Anspruch 14 oder 15, **dadurch gekennzeichnet, dass** die Sendeleistungen, die den Sendeterminals der Paare der Mehrzahl zugewiesen werden, die von dem ersten und dem zweiten Paar verschieden sind, auf einen vorbestimmten minimalen Wert ($P^{min}$) festgehalten werden.

**Claims**

**1.** A power allocation method for a wireless telecommunication system comprising at least a first couple of terminals consisting of a first transmitting terminal and a first receiving terminal and a second couple of terminals consisting of a second transmitting terminal and a second receiving terminal, a first communication between the terminals of the first couple using the same transmission resources as a second communication between the terminals of the second couple, so that both communications mutually interfere, wherein the first communication must meet a first set flow rate ($\rho_1$) and the second communication must meet a second set flow rate ($\rho_2$) **characterised in that** a control node:

- determines (710), from an estimation of channel coefficients between the transmitting and receiving terminals, and for a transmission power range of the transmitting terminal, and a second transmission power range of the second transmitting terminal, a partition of an interference diagram of the first and second communications, into different areas, said interference diagram providing the signal to noise ratio at the first receiving terminal as a function of the signal to noise ratio at the second receiving terminal, each area of said diagram corresponding to a distinct type of processing of the interference by said first and second receiving terminals;
- calculates (720), for each communication, the minimum transmission power curve enabling to perform interference processing in each said area, in view of the first and second set flow rates;
- determines (720, 730), if any, the point of intersection of said minimum transmission power curves relating to the first and second communications;
- deduces (740) from the coordinates of this point of intersection in the interference diagram, a first and a second transmission power values $\left( P_1^*, P_2^* \right)$ to be allocated to the first and second transmitting terminals, respectively;

- transmits (750) the first and second power values to the first and second transmitting terminals, respectively.

**2.** The power allocating method according to claim 1, **characterised in that** said control node, further determines in which area of said partition said point of intersection is located, deduces therefrom the first and second types of interference (p*,q*) for the first and second communications, and transmits (760) said first and second types to the first and second receiving terminals respectively.

**3.** The power allocating method according to claim 1 or 2, **characterised in that**, if the intersection of the minimum transmission power curves, relating to the first and second communications, is null, the control node informs the first and second transmitting terminals that a power allocation for said flow rate values is impossible.

**4.** The power allocating method according to one of the preceding claims, **characterised in that** said minimum transmission power curves are defined by intervals and consist of portions of straight lines on these intervals, and **in that** the control node determines the intersection between the power curves by searching for the points of intersection between the straight lines relating to the first curve and the straight lines relating to the second curve, by removing from all of the points of intersection thus obtained, those that do not belong to the corresponding segments, and selecting a point within all of the remaining points according to a predetermined criterion.

**5.** The power allocating method according to claim 4, **characterised in that** said criterion is the minimum transmission power for the first and/or second communication(s) .

**6.** The power allocating method according to claim 4, **characterised in that** said criterion is the minimum sum of the transmission powers of the first and second communications.

**7.** The power allocating method according to claim 4, **characterised in that** said criterion is the minimum complexity of interference processing for the first and/or second communication(s).

8. The power allocating method according to one of preceding claims, **characterised in that** each receiving terminal estimates the channel coefficients between transmitting terminals and itself, and transmits the coefficients thus estimated to the control node.

9. The power allocating method according to one of preceding claims, **characterised in that** each transmitting terminal transmits to the control node the flow rate value of the corresponding communication ($\rho_1, \rho_2$) as well as the maximum power $\left(P_1^{\max}, P_2^{\max}\right)$ at which it can emit.

10. A power allocation method for a wireless telecommunication system comprising a plurality of couples of terminals, each couple consisting of a transmitting terminal and a receiving terminal, **characterised in that** a control node initially allocates (910) the same transmission power ($P^{com}$) to the transmitting terminals of said couples, and that for a communication, referred to as first communication between the transmitting and receiving terminals of a couple, referred to as first couple, it is determined in a first step (920) the communication, referred to as second communication, between the transmitting and receiving terminals of the couple, referred to as second couple, which causes the highest interference level on the first communication, and it is carried out, in a second step (930), the power allocation to the first and second transmitting terminals of said first and second communications by means of the allocation method according to one of the preceding claims, said first and second steps being repeated until a predetermined stop criterion (940) is met.

11. The power allocation method according to claim 10, **characterised in that** the stop criterion is a maximum number of iterations.

12. The power allocation method according to claim 10, **characterised in that** the stop criterion is a convergence criterion for the consecutives powers allocated to the transmitting terminals of the couples of said plurality.

13. The power allocation method according to claim 12, **characterised in that** if the convergence criterion is not fulfilled at the end of the predetermined number of iterations, the second communication between the terminals of the second couple is assigned transmission resources different from those used by the first communication between terminals of the first couple.

14. A power allocation method for a wireless system comprising a plurality of couples of terminals, each couple consisting of a transmitting terminal and a receiving terminal, **characterised in that** said couples are matched according to a predetermined matching criterion, **in that**, for each pair thus consisting of a first and second couples, the power allocation method according to one of claims 1 to 9 is applied, the interference due to communications other than those of the first and second couples being taken into account as thermal noise in said allocation method.

15. The power allocation method according to claim 14, **characterised in that** said matching criterion is a degree of urgency, a priority order or a quality factor of a transmission channel.

16. The power allocation method according to claim 14 or 15, **characterised in that** transmission powers allocated to transmitting terminals of couples of said plurality other than said first and second couples are set to a predetermined minimum value ($P^{min}$).

FIG. 1

FIG. 2

FIG. 3

FIG. 4

FIG. 5

FIG. 6

calcul de $C_1, C_2, C_{12}$
calcul de $f_1, f_2$
détermination de la partition $\Omega_{pq}$
du diagramme d'interférence
— 710

détermination des courbes de frontière
$\Lambda_1$ et $\Lambda_2$
— 720

735

allocation de puissance
impossible pour la contrainte
$\rho_1, \rho_2$

$\Lambda_1 \cap \Lambda_2 = \varnothing$ ?
— 730

Y

N

détermination des puissances
$P_1^*$ et $P_2^*$
— 740

transmission des valeurs $P_1^*$ et $P_2^*$
à $E_1$ et $E_2$
— 750

transmission des valeurs $p^*$ et $q^*$
à $R_1$ et $R_2$
— 760

# FIG. 7

calcul des coordonnées $\gamma^1_{pq}$ et $\gamma^2_{pq}$ des points d'intersection $\Gamma_{pq} = D^1_p \cap D^2_q$ — 810

élimination des points $\Gamma_{pq}$ tels que $\gamma^1_p \notin \sigma^1_p$ ou $\gamma^2_q \notin \sigma^2_q$ — 820

835

allocation de puissance impossible pour la contrainte $\rho_1, \rho_2$

$Card(\Phi) = 0$ ? — 830

Y

N

845

$Card(\Phi) = 1$ ? — 840

N → sélection du point $\Gamma_{pq}$

Y

return $\left( \gamma^{pq}_1, \gamma^{pq}_2 \right)$ — 850

# FIG. 8

allocation d'une puissance $P^{com}$ aux terminaux $E_k$, $k=1,...,K$ — 910

$\forall k$, estimation du niveau d'interférence induit par la communication $k' \neq k$ sélection de $T_{k'} = (E_{k'}, R_{k'})$ — 920

allocation centralisée de puissance aux terminaux $E_k$ :

$$\mathbf{P^{(n)}} = \left(P_1^{(n)},...,P_K^{(n)}\right)^T$$

— 930

945

$n = n+1$

critère d'arrêt satisfait ? — 940

end — 950

# FIG. 9

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7593426 B

**Littérature non-brevet citée dans la description**

- **C-H YIH et al.** Centralized power allocation algorithms for OFDM cellular networks. *IEEE MILCOM,* 2003, 1250-1255

- **SHIH-CHUN CHANG et al.** Coding for T-User Multiple-Access Channels. *IEEE Transactions on Information Theory,* Novembre 1979, vol. IT-25 (6), 684-691